# EUROPÄISCHE PATENTSCHRIFT

(11) **EP 0 983 158 B1**
(45) Veröffentlichungstag und Bekanntmachung des Hinweises auf die Patenterteilung: **19.11.2003**
(21) Anmeldenummer: 98933439.6
(22) Anmeldetag: 04.05.1998
(51) Int. Cl.: B60J 7/057

(54) **VERFAHREN ZUM BETREIBEN EINES ELEKTROMOTORISCHEN ANTRIEBS**
ELECTROMOTIVE ACTUATOR
DISPOSITIF D'ACTIONNEMENT ELECTROMOTEUR

(30) Priorität: 22.05.1997 DE 19721338; 05.02.1998 DE 19804409
(43) Veröffentlichungstag der Anmeldung: 08.03.2000
(73) Patentinhaber: ROBERT BOSCH GMBH, 70442 Stuttgart (DE)
(72) Erfinder: STOLZ, Christian, D-77815 Bühl (DE)
(86) Internationale Anmeldenummer: DE9801229
(87) Internationale Veröffentlichungsnummer: WO98052784

(56) Entgegenhaltungen:
- DE-A- 3 324 107
- PATENT ABSTRACTS OF JAPAN vol. 009, no. 213 (M-408), 30. August 1985 & JP 60 071329 A (NIPPON DENSO KK;OTHERS: 01), 23. April 1985

## Beschreibung

### Stand der Technik

Die Erfindung geht aus von einem Verfahren zum Betreiben eines elektromotorischen Antriebs nach dem Oberbegriff des Hauptanspruchs.

Es ist bereits eine Betätigungseinrichtung für Schiebe-Hebe-Dächer in Kraftfahrzeugen aus der DE-C-33 48 489 bekannt mit einem Bedienelement als Sollwertgeber für die Wahl einer Verstellbewegung eines Schiebe-Hebe-Dach-Deckels. Durch Betätigung des Bedienelementes wird der Deckel in einer Schiebebewegung oder einer Schwenkbewegung ausgehend von einer Nullstellung zu einer Sollposition verstellt. Ein Mikrocomputer führt einen Sollwert-Istwert-Vergleich durch und gibt in Abhängigkeit der Regelabweichung der Ist-Position des Deckels von der an dem Sollwertgeber eingestellten Soll-Position Steuersignale an eine Antriebssteuerung. Ein Antrieb als Teil des Positionsregelkreises verstellt den Deckel.

Mit der DE-A-33 24 107 ist eine Betätigungsvorrichtung für Schiebehebedächer, gemäß dem Oberbegriff des Anspruchs 1, bekannt geworden, bei der mittels eines als Sollwertgeber ausgebildeten Betätigungsglied das bewegliche Teil motorisch in eine vorgebbare Position verstellt werden kann. Der Antrieb ist dabei Teil eines Regelkreises, der die am Sollwertgeber gewählte Stellung mit der Ist-Stellung des bewegbaren Teils vergleicht und das bewegbare Teil verstellt, bis die Regelabweichung zu null geworden ist. Dabei werden die Soll- und Ist-Stellungssignale über einen A/D-Wandler in Zeitmultiplexbetrieb in einen Mikrocomputer eingelesen, um den Verstellmotor des Schiebedachs anzusteuern.

Desweiteren zeigt die Zusammenfassung der JP 600 71 329 eine Vorrichtung zur elektrischen Betätigung eines Schiebedachs mit einer Steuer- und einer Speichereinheit, bei der der Betriebsmodus in Abhängigkeit eines Positionssignals gewählt werden kann.

Weitere Vorrichtungen zum Betreiben eines elektromotorischen Antriebs sind auf dem Markt bekannt, die Soll- und Istwerte nacheinander (sequentiell) auslesen.

Darüber hinaus wird in diesen Vorrichtungen jeder durch das Bedienelement ausgegebener Stellbefehl zuerst zu Ende geführt und das Schiebe-Hebe-Dach in die entsprechende Sollposition verfahren, bevor ein gegebenenfalls zwischenzeitlich erteilter neuer Stellbefehl ausgeführt werden kann (statischer Übergang).

### Vorteile der Erfindung

Das erfindungsgemäße Verfahren, gemäß Anspruch 1, hat den Vorteil, daß ein Stellbefehl als Ist-Zustandssignal und mindestens ein weiteres Ist-Zustandssignal zyklisch, beispielsweise alle 10 Millisekunden, durch einen Mikroprozessor erfaßt und abhängig von der Kombination der erfaßten Signale eine Reaktion unverzüglich ausgelesen wird, wobei die Reaktion vorgibt, ob und wie die möglichen Betätigungen des Bedienelementes durch den Benutzer zu einer Änderung des aktuellen Antriebsverhalten des Schiebe-Hebe-Daches führen.

Dieses ermöglicht die gleichzeitige (simultane) Auswertung von mehreren Ist-Zustandssignalen.

Damit ist als weiterer Vorteil verbunden, daß der Antrieb des Schiebe-Hebe-Daches unmittelbar (nach einer Entprellzeit) auf neue Stellbefehle reagiert (dynamischer Übergang). Mit Hilfe des erfindungsgemäßen Verfahrens wird das Schiebe-Hebe-Dach in kürzest möglicher Zeit auf den aktuell über einen Stellbefehl vorgegebenen Sollwert gebracht, sofern diese Reaktion im gegenwärtigen Ist-Zustand des Schiebe-Hebe-Daches zulässig ist.

Durch die in den Unteransprüchen aufgeführten Maßnahmen ergeben sich vorteilhafte Weiterbildungen und Verbesserungen der im Hauptanspruch angegebenen Merkmale.

Die Ist-Zustandssignale definieren einen aktuellen Ist-Zustand. Die Reaktion wird in Abhängigkeit des Ist-Zustandes von dem Mikroprozessor aus einem Speicher ausgelesen und gibt alle Möglichkeiten eines zulässigen oder unzulässigen Übergangs von dem aktuellen Ist-Zustand in einen weiteren möglichen Ist-Zustand und/oder die zulässigen oder unzulässigen Betätigungen des Bedienelementes vor, so daß der Benutzer eine Änderung des Antriebsverhaltens des Schiebe-Hebe-Daches auslösen kann oder auch nicht.

Vorteilhaft ist weiterhin, daß für den Fall, daß die direkte Bewegung auf die neue Sollposition aufgrund des gegenwärtigen Ist-Zustands nicht erlaubt ist, als Reaktion verschiedene, nacheinander anzufahrende erlaubte Sollpositionen vorgegeben werden. Beispielsweise könnte das Schiebe-Hebe-Dach aus der geöffneten Position erst in die Schließposition, und dann in die über den Stellbefehl gewählte Hebelage als Sollposition gebracht werden.

Weiterhin ist von Vorteil, daß die, beispielsweise durch den Fahrzeughersteller festgelegte, Reaktion codiert in einem Speicher der signalverarbeitenden Anordnung niedergelegt wird, beispielsweise in Form einer Funktionsmatrix, bei der die Bedienungmöglichkeiten des Bedienelementes (durch den Benutzer) den möglichen Ist-Zustände bzw. Übergänge von Ist-Zuständen zugeordnet werden. Damit ist jederzeit die Information über die festgelegte Reaktion abrufbar.

Es werden drei Reaktionen unterschieden: statische, dynamische bei stehendem Motor und dynamische bei laufendem Motor. Vorzugsweise werden die Reaktionen in je einer Funktionsmatrix im Speicher hinterlegt.

Des weiteren kann als Reaktion auf eine Fehlfunktion der Ist-Zustandssignale wie zum Beispiel einen fehlerhaften Stellbefehl (beispielsweise Kurzschluß im Potentiometer des Bedienelements) oder einen Bedientastenfehler ein Fehlersignal abgegeben werden. Von Vorteil ist es, daß bei Auftreten des Fehlersignals keine neue Sollposition festgelegt und/oder der Antrieb gestoppt wird. Weiterhin kann bei Auftreten des Fehlersignals das Schiebe-Hebe-Dach über eine Notfunktion manuell geschlossen werden.

Im Hinblick auf die unterschiedlichen Problemstellungen bei Schiebe-Hebe-Dächern ist die jeweiligen Zuordnung der Bedienung zu den erfaßten Ist-Zuständen und der damit vorgegebenen statischen oder dynamischen Reaktion für die Funktionsprüfung ein weiterer Vorteil, da die Zuordnung in Tabellen übersichtlich darstellbar ist.

Weiterhin ist das Verfahren auf mehrere definierte Eingangsgrößen (Ist-Zustandssignale) aber lediglich eine Ausgangsgröße (Reaktion) abgestimmt. Damit ergibt sich ein modularer Aufbau und der Vorteil der Vereinfachung für die Anpassung an unterschiedliche Schiebe-Hebe-Dächer. Insbesondere müssen lediglich die erfaßten Ist-Zustände und die festgelegten Reaktionen dem jeweiligen Konstruktionsprinzip des Schiebe-Hebe-Daches sowie den Bedienungsmöglichkeiten des Bedienelementes angepaßt werden.

Schließlich sind die Ist-Zustände derart definiert, daß das Schiebe-Hebe-Dach sich tatsächlich in jeder Position in einem definierten Ist-Zustand befindet.

### Zeichnung

Ein Ausführungsbeispiel der Erfindung ist in der Zeichnung dargestellt und in der nachfolgenden Beschreibung näher erläutert. Figur 1 zeigt ein Schaltbild einer das erfindungsgemäße Verfahren realisierenden Vorrichtung, Figur 2 ein Ablaufdiagramm des erfindungsgemäßen Verfahrens, und Figur 3 eine Tabelle der anhand der Ist-Zustandssignale erfaßten und definierten Ist-Zustände.

### Beschreibung des Ausführungsbeispieles

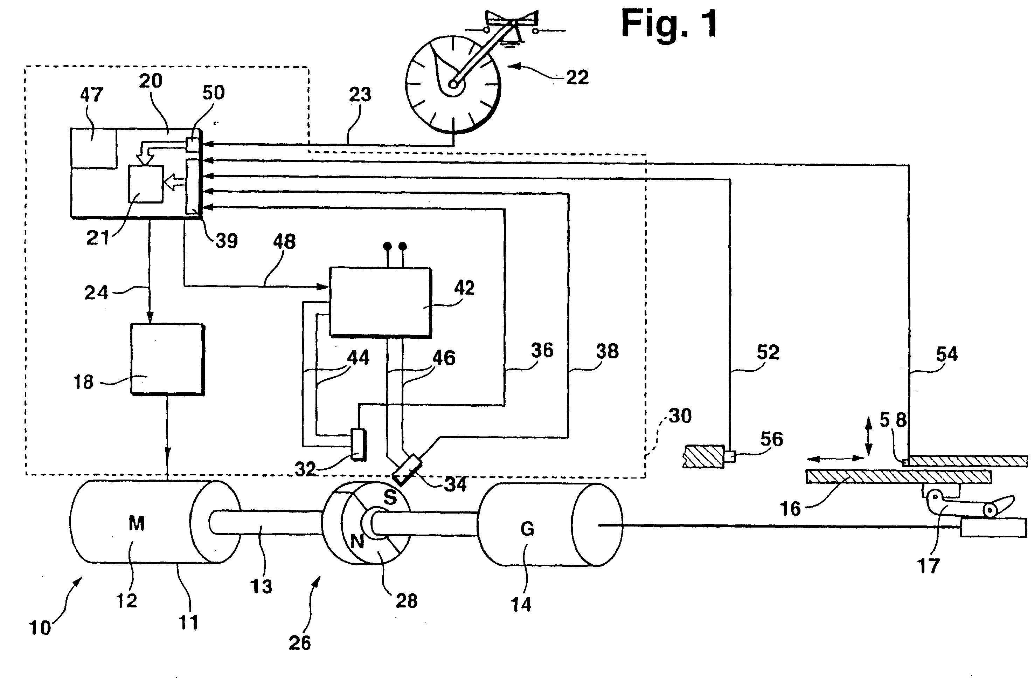

Das erfindungsgemäße Verfahren ist in der dargestellten Vorrichtung gemäß Figur 1 umgesetzt. Eine elektromotorische Antriebseinheit 10 mit einem Elektromotor 12 treibt über ein Getriebe 14 ein Schiebe-Hebe-Dach 16 mit einer Kulissenführung 17, die über eine lineare Bewegung das Schieben und das Heben des Schiebe-Hebe-Daches 16 ermöglicht, für ein Kraftfahrzeug an. Der Elektromotor 12 weist eine Motorankerwelle 13 auf, die relativ zum Stator 11 des Elektromotors 12 rotiert.

Eine signalverarbeitende Anordnung 20 steuert und/oder regelt den Elektromotor 12 nach Maßgabe von Stellbefehlen 23, die von einem Bedienelement 22 vorgegeben werden, über eine Treiberschaltung 18. Die Treiberschaltung 18 versorgt den Elektromotor 12 mit Energie und gibt die Geschwindigkeit des Elektromotors 12 sowie seine Drehrichtung nach Maßgabe eines von der signalverarbeitenden Anordnung 20 übermittelten Steuersignals 24 vor.

Der Elektromotor 12 weist einen inkrementellen Lagesensor 26 auf einem Magnetrad 28 oder einem Getriebe auf, das auf der Motorankerwelle 13 des Elektromotors 12 drehfest angeordnet ist, und zwei Hall-Sensoren 32 und 34, die als Magnetfeldsensoren in einem Winkel von 90° oder kleiner in Umfangsrichtung des Magnetrades 28 auf einer Elektronikplatine 30 angeordnet sind. Beide Hall-Sensoren 32, 34 werden von einer Sensortreiberschaltung 42 über Leitungen 44, 46 mit Energie versorgt.

Die signalverarbeitende Anordnung 20 beeinflußt die Sensortreiberschaltung 42 über ein Betriebssignal 48 und vermag die Hall-Sensoren 32, 34 durch Abschaltung ihrer Energiezufuhr außer Betrieb und wieder in Betrieb zu setzen.

Der signalverarbeitenden Anordnung 20 sind über eine Eingangsschnittstelle 39 Sensorsignale 36, 38 der Hallsensoren 32, 34 sowie Sensorsignale 52, 54 von zwei Mikroschaltern 56 und 58 zugeführt. Der Mikroschalter 56 ist betätigt, wenn sich das Schiebe-Hebe-Dach 16 in Hebeposition befindet. Der Mikroschalter 58 ist betätigt, wenn sich das Schiebe-Hebe-Dach 16 in der Schließposition befindet.

Die Sensorsignale 36, 38, 52, 54 werden in der Eingangsschnittstelle 39 aufbereitet und einem Mikroprozessor 21 mit zugeordnetem Speicher 47 der signalverarbeitenden Anordnung 20 als Ist-Zustandssignale zugeführt.

Über eine Eingabeschnittstelle 50 wird der signalverarbeitenden Anordnung 20 darüber hinaus ein Stellbefehl 23 zur Sollwertvorgabe als weiteres Ist-Zustandssignal zugeführt, der beispielsweise über ein Potentiometer als Bedienelement 22 generiert und in der Eingabeschnittstelle 50 aufbereitet wird. Das Potentiometer weist 11 Raststellungen auf, wobei beispielsweise die Raste Null der geschlossenen Position des Deckels 16 und die weiteren zehn Rasten Soll-Positionen des Schiebe-Hebe-Daches 16 im Schiebebereich entsprechen.

Das Bedienelement 22 weist darüber hinaus einen wippschalter auf, der bezüglich der Tippfunktion (kurzzeitiges Antippen) und Tastfunktion (Antippen für beispielsweise länger als 400 Millisekunden) in Zug- und Druckrichtung betätigbar ist. Beispielsweise wird das Schiebe-Hebe-Dach 16 bei Tippbetätigung in Druckrichtung automatisch in die Hebeposition angehoben. Potentiometer und Wippschalter sind beispielsweise derart miteinander verknüpft, daß der Wippschalter nur bei Raste Null des Potentiometers betätigt werden kann. Ferner ist eine gleichzeitige Bedienung des Potentiometers und des Wippschalters durch den Fahrer möglich, so daß jeweils nur ein Stellbefehl 23 für eine definierte Sollposition des Schiebe-Hebe-Daches 16 erzeugt wird.

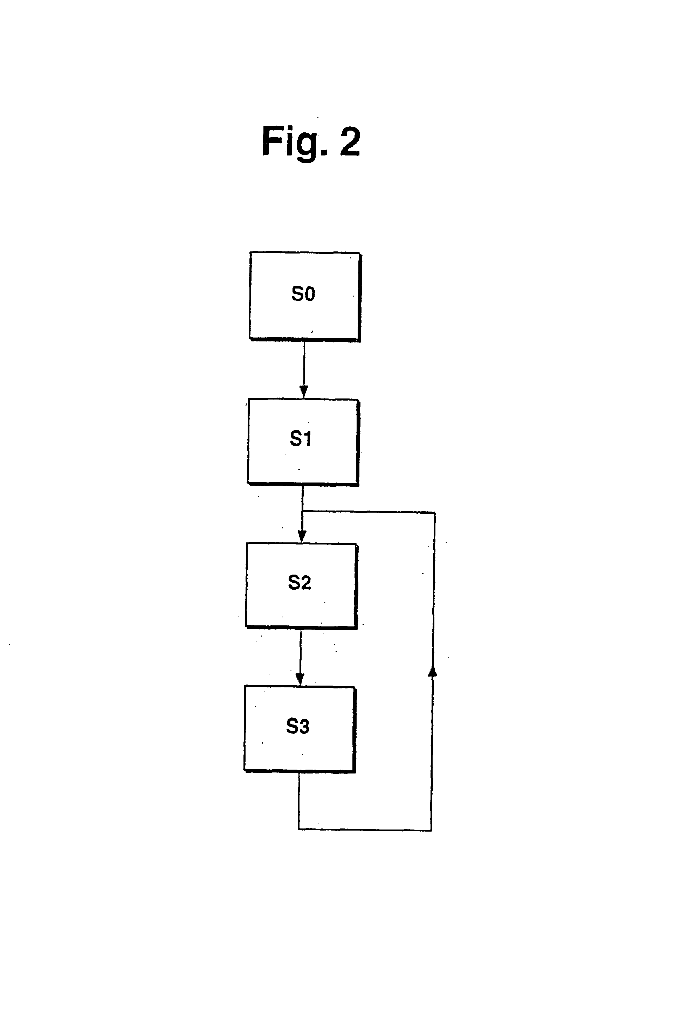

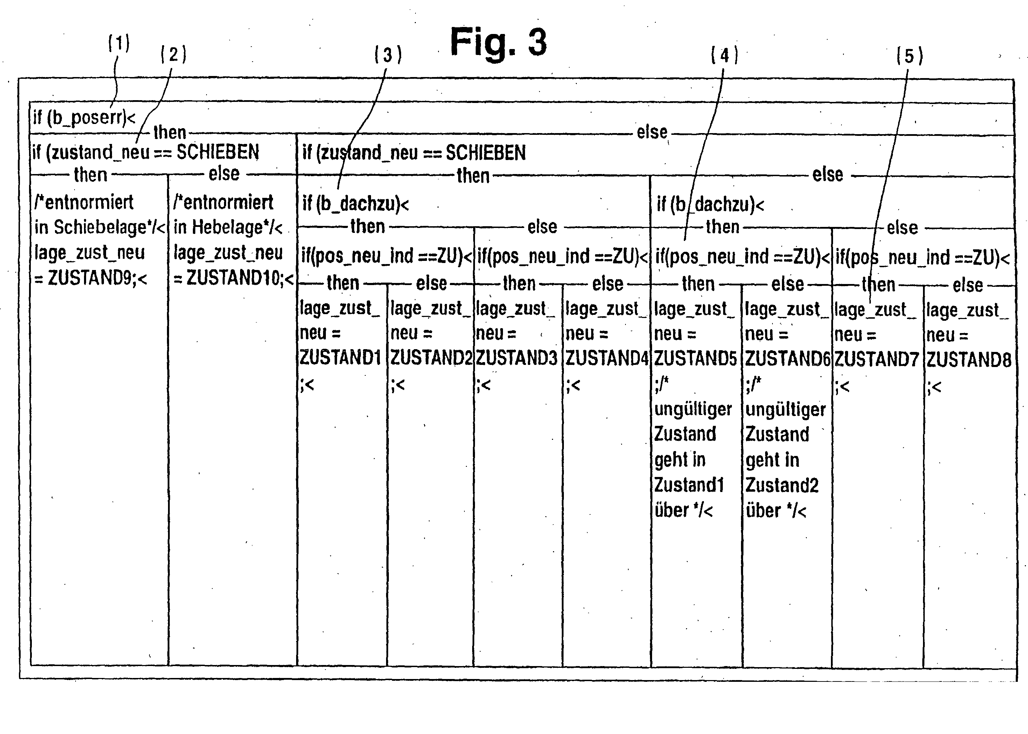

Figur 2 beschreibt in vier Schritten S0 bis S3 den Ablauf des erfindungsgemäßen von der signalverarbeitenden Anordnung 20 zyklisch abzuarbeitenden Verfahrens. Im Schritt S0 wird das Verfahren gestartet und im Schritt S1 ein Startzustand des Schiebe-Hebe-Daches 16 erfaßt. In dem weiteren Schritt S2 werden die Ist-Zustandssignale erfaßt und ausgewertet und einem im Speicher 47 abgelegten Ist-Zustand gemäß Figur 3 zugeordnet. Ausgehend von dem ermittelten Ist-Zustand wird in Schritt S3 eine-Reaktion vorgegeben, d.h. der Benutzer (Fahrer) kann bei entsprechender Betätigung des Bedienelements 22 eine Änderung des Antriebverhaltens des Schiebe-Hebe-Daches 16 auslösen oder auch nicht auslösen und somit Übergänge von einem Ist-Zustand in einen weiteren Ist-Zustand (Sollwertvorgabe) durchführen oder nicht durchführen.

Figur 3 zeigt mögliche definierte Ist-Zustände für ein Schiebe-Hebe-Dach 16 auf, die in Abhängigkeit der Ist-Zustandssignale zugeordnet werden. Die Ist-Zustandssignale hängen dabei von der Ist-Position des Schiebe-Hebe-Daches 16 und insbesondere von folgenden Faktoren ab:
1. das Schaltergebnis der Mikroschalter 56, 58,
2. ferner die Einstellung des Bedienelements 22 und der daraus abgeleitete Stellbefehl 23,
3. schließlich die durch die inkrementelle Positionsermittlung ermittelte Ist-Position des Schiebe-Hebe-Daches 16.

Die Ist-Zustandssignale werden in der signalverarbeitenden Anordnung 20 ausgewertet und ergeben gemäß Figur 3 die nachfolgend definierten Variablen:
(1) "B_poserr" ist eine boolesche Variable, die durch die Mikroschalter 56, 58 oder Hallsensoren 32, 34 erfaßt wird und die bei einem normierten Zustand des Schiebe-Hebe-Daches den Wert "false" und bei einer entnormierten Zustand den Wert "true" annimmt. Ein entnormierter Zustand tritt beispielsweise vor der Initialisierung des Schiebe-Hebe-Daches 16, nach einem Watch-Dog-Reset, sowie nach einem Abklemmen der Vorrichtung von der Spannungsversorgung (Klemme 30) des Kraftfahrzeugs oder bei einem manuellen Verstellen des Schiebe-Hebe-Daches 16 auf. Die Normierung findet z.B. bei einem ersten Initialisierungsdurchlauf des Schiebe-Hebe-Daches 16 statt.
(2) "Zustand_neu" ist eine Variable die ebenfalls durch Abfragen des Schaltzustands der Mikroschalter 56, 58 erhalten wird und eine Information wiedergibt, ob das Schiebe-Hebe-Dach 16 sich in einer Schiebelage oder in einer Hebelage befindet.
(3) "B_dachzu" ist ebenfalls eine boolesche Variable, die bei geschlossenem Dach 16 den Wert "true" annimmt. Dieses Ist-Zustandssignal wird durch die Mikroschalter 56, 58 erfaßt.
(4) Schließlich gibt es einen Integer Wert "pos_neu_ind", der die Einstellung des Bedienelements 22 wiedergibt. Insbesondere ist eine Rasteinstellung, beispielsweise die Raste Null, des Potentiometers durch den Wert "Dach_ZU" dargestellt.

Jede realisierbare Kombination der Ist-Zustandssignale bzw. Variablen (1) bis (4) ergibt einen definierten Ist-Zustand, der durch eine Variable "lage_zust_neu" (5) wiedergegeben ist. Diese Variable nimmt beispielsweise die Werte Zustand 1 bis Zustand 10 an, die in der Tabelle gemäß Figur 3 für eine Ausgestaltung des Schiebe-Hebe-Daches 16 definiert sind. Die Anzahl und Definition der Ist-Zustände (5) ist abhängig von der Konstruktion des Schiebe-Hebe-Daches und des Bedienelementes 22 und ist daher für anderweitige Realisierungen beliebig erweiterbar.

Das erfindungsgemäße Verfahren wird im folgenden anhand Figur 2 mit Bezug auf Figur 1 und 3 beschrieben:

### Schritt S0:

Der Start des Programms wird insbesondere durch die Betätigung des Zündschlüssels durch den Fahrer des Kraftfahrzeugs ausgelöst oder bei der Initialisierung des Schiebe-Hebe-Daches 16. Damit ist das Schiebe-Hebe-Dach 16 aktiviert und kann durch den Benutzer über das Bedienelement 22 betätigt werden.

### Schritt S1:

Der Variable für den Ist-Zustand "lage_zust_neu" (5) wird ein Startzustand zugeordnet. Während des Startzustands erfolgt ein Einlesen der Sensorsignale 52, 54, 36, 38 der Mikroschalter 56, 58 und der Hallsensoren 32, 34. Weiterhin ist innerhalb einer Entprellzeit keine Reaktion erlaubt.

### Schritt S2:

Der Mikroprozessor 21 erfaßt zyklisch, etwa alle 10 Mikrosekunden, die Ist-Zustandssignale der Sensoren 32, 34, 56, 58 und des Bedienelements 22, wertet diese aus und ordnet den Ist-Zustandssignalen bzw. Variablen (1) bis (4), abhängig von der Signalkombination, einen von zehn möglichen Ist-Zuständen (5) zu.

### Schritt S3:

Der Mikroprozessor 21 liest in Abhängigkeit von dem Ist-Zustand die dafür im Speicher abgelegte Reaktion aus diesem aus. Die Reaktion gibt dabei vor, ob und wie bei einer Verstellung des Potentiometers und/oder einer Zug- oder Druckbetätigung des Wippschalters der Antrieb 10 des Schiebe-Hebe-Daches 16 reagiert. Als Reaktion sind alle zulässigen und unzulässigen Übergänge von dem aktuellen Ist-Zustand in andere Ist-Zustände sowie die zulässigen und unzulässigen Bedienmöglichkeiten des Bedienelemenets 22 festgelegt. Dabei werden, nachfolgend erläuterte, statische oder dynamische Reaktionen bei stehendem und bei laufendem Motor 12 unterschieden.

Beispielsweise befindet sich der Antrieb im Zustand 4 gemäß Figur 3, d.h. die Antriebseinheit 10 ist normiert und befindet sich in einer Schiebelage. Weiterhin ist das Schiebe-Hebe-Dach 16 geöffnet und das Bedienelement 22 gibt keinen Stellbefehl 23 "Dach_ZU" aus, d.h. befindet sich nicht in der Ausgangsstellung.

Die statische Reaktion zu dem Zustand 4 erlaubt nun folgendes:
1. Stellt der Fahrer über das Bedienelement 22 den Stellbefehl 23 "Dach_ZU" ein, wird die geschlossene Schiebe-Hebe-Dachposition als Sollposition angefahren. Dabei nimmt die Variable "pos_neu_ind" (4) den entsprechenden Wert an, der Zustand 4 geht gemäß Figur 3 nun in Zustand 3 über.
2.Stellt der Fahrer über das Potentiometer als Bedienelement 22 eine andere Position der Schiebelage ein, dann wird das Schiebe-Hebe-Dach 16 in diese Position verfahren.
3.Betätigt er den Wippschalter als Tastfunktion in und das Zugrichtung, dann wird die Notfunktion aktiviert und das Schiebe-Hebe-Dach 16 kann manuell durch den Fahrer in seine geschlossene Position verstellt werden.

Alle weiteren Betätigungen des Wippschalters als Bedienelement 22, z.B. Tippfunktion in Druckrichtung für die Ansteuerung der Hebelage, sind hierbei nicht erlaubt und werden daher durch die signalverarbeitende Anordnung 20 nicht ausgeführt. Betätigt der Fahrer das Bedienelement 22 nicht, dann findet ebenfalls keine verstellung des Schiebe-Hebe-Daches 16 statt.

Hat der Fahrer das Bedienelement 22 auf den Stellbefehl 23 "Dach_ZU" verstellt (Zustand 3), dann gibt die signalverarbeitende Anordnung 20 ein Steuersignal 24 an die Treiberschaltung 18 des Elektromotors 12, um die geschlossene Schiebe-Hebe-Dachposition als Sollposition anzufahren (Zustand 1). Während dessen wird eine sogenannte dynamische Reaktion ausgelesen.

Ist der Elektromotor 12 noch in Ruhe (dynamische Reaktion bei stehendem Motor), beispielsweise während der Anlaufverzögerung des Potentiometers (500 Millisekunden), bewirkt eine weitere Verstellung des Potentiometers in dieser Zeitspanne, daß eine weitere entsprechende Schiebe-Hebe-Dachposition als neue Sollposition durch die signalverarbeitende Anordnung 21 erfaßt und diese, ungeachtet des ersten Stellbefehls 23, sofort berücksichtigt wird. Die Notfunktion sowie die Betätigung des Wippschalters zum Verfahren des Schiebe-Hebe-Daches 16 in seine Hebelage sind ebenfalls erlaubt.

Nach der Anlaufverzögerung des Potentiometers 22 und bei laufendem Motor 12 (dynamische Reaktion bei laufendem Motor) wird das Schiebe-Hebe-Dach 16 gemäß der eingestellten Sollposition in seine geschlossene Position verfahren. Bei nochmaliger Verstellung des Potentiometers zu einer weiteren Sollposition des Schiebe-Hebe-Daches 16 während des Verstellvorgangs, wird die weitere entsprechende Schiebe-Hebe-Dachposition als neue Sollposition durch die signalverarbeitende Anordnung 21 sofort erfaßt und diese, ungeachtet des ersten Stellbefehls 23, direkt angefahren. Während dessen ist eine Aktivierung der Notfunktion nicht mehr erlaubt, da die Notfunktion die Automatikverstellung des Schiebe-Hebe-Daches 16 nicht unterbrechen soll. Lediglich der Wippschalter zum Verstellen des Schiebe-Hebe-Daches 16 in eine Hebelage darf betätigt werden. Das erfindungsgemäße Verfahren wird fortgesetzt mit Schritt S2.

Das Schiebe-Hebe-Dach 16 reagiert daher dynamisch auf neue Stellbefehle 23, da mit Hilfe des erfindungsgemäßen Verfahrens das Schiebe-Hebe-Dach 16 in kürzest möglicher Zeit auf den aktuell über einen Stellbefehl 23 vorgegebenen Sollwert gebracht wird (dynamischer Übergang).

Falls die direkte Bewegung auf die neue durch den Fahrer vorgegebene Sollposition aufgrund des gegenwärtigen Ist-Zustands nicht erlaubt ist (z.B. Zustand 4 in Zustand 8), werden als Reaktion verschiedene, nacheinander anzufahrende Sollpositionen vorgegeben. Beispielsweise könnte das Schiebe-Hebe-Dach 16 erst in die Schließposition, und dann in die über den Stellbefehl 23 gewählte Sollposition gebracht werden.

Wie bereits eingangs beschrieben, erfaßt der Mikroprozessor 21 die Ist-Zustandssignale der Sensoren 32, 34, 56, 58 und des Eingangsmittels 22 und liest die Reaktion aus. Bei einer Fehlfunktion des Bedienelements 22 oder eines Bedienungsfehlers treten jedoch fehlerhafte Signale auf, die durch die Zustandslogik des Mikroprozessors 21 ebenfalls erkannt werden. Die einem Fehlersignal zugeordnete Reaktion führt zu keiner Festlegung einer neuen Sollposition für das Schiebe-Hebe-Dach 16, sondern die bisher gültige Sollposition wird beibehalten und/oder der Antrieb 10 gestoppt. Weiterhin kann bei Auftreten des Fehlersignals das Schiebe-Hebe-Dach 16 über die Notfunktion manuell geschlossen werden.

In einer weiteren Ausgestaltung des Ausführungsbeispiels wird lediglich ein Mikroschalter 58 verwendet, der beispielsweise betätigt ist, wenn sich das Schiebe-Hebe-Dach 16 in einem geschlossenen Zustand befindet. Hierbei ist eine Position des Schiebe-Hebe-Daches 16 durch das Umschalten des Mikroschalters 58 bei Übergang des Schiebe-Hebe-Daches 16 von dem geschlossenem Zustand in die Schiebelage genau definiert. Die weiteren Positionen werden durch die Auswertung der Sensorsignale 36, 38 der Hallsensoren 32, 34 ermittelt und durch den Mikroprozessor 21 in die Variablen "B_poserr" (1), "Zustand_neu" (2) und "B_dachzu" (3) geschrieben.

Schließlich kann auf Mikroschalter auch vollständig verzichtet werden, wenn ein mechanischer Anschlag des Schiebe-Hebe-Daches 16, z.B. die geöffnete Hebelage, für die Normierung herangezogen wird (Positionszähler wird beispielsweise auf Null gesetzt) und die weitere Positionsund Drehrichtungsbestimmung durch die Hallsensoren 32, 34 erfolgt.

## Patentansprüche

1. Verfahren zum Betreiben eines elektromotorischen Antriebs (10) zum Verstellen eines Kraftfahrzeug-Schiebe-Hebe-Daches (16) mittels einer signalverarbeitenden Anordnung (20), mit einem Mikroprozessor (21), dem ein Stellbefehl (23) eines Bedienelements (22) für eine Sollposition des Schiebe-Hebe-Daches (16) als Zustandssignal sowie wenigstens ein weiteres Zustandssignal wenigstens eines Mittels (26, 32, 34, 56, 58) zur Erfassung der Ist-Position des Antriebs (10) und/oder des Schiebe-Hebe-Daches (16) zugeführt ist, und der den Antrieb (10) zur Bewegung des Schiebe-Hebe-Daches (16) auf seine Sollposition steuert oder regelt, **dadurch gekennzeichnet, dass** durch den Mikroprozessor (21) zyklisch die wenigstens zwei Zustandssignale erfasst und abhängig von der Signalkombination mindestens eine von mehreren festgelegten Reaktionen ausgelesen wird, wobei durch nochmalige Verstellung des Bedienelements (22) während des Verstellvorgangs eine weitere entsprechende erlaubte Schiebe-Hebe-Dach-Position als neue Sollwertposition durch die signalverarbeitende Anordnung (20) sofort erfasst und ungeachtet des ersten Stellbefehls (23) direkt angefahren werden kann.

2. Verfahren nach dem Anspruch 1, **dadurch gekennzeichnet, dass** die festgelegten Reaktionen codiert in einem Speicher (47) der signalverarbeitenden Anordnung (20) niedergelegt werden.

3. Verfahren nach einem der Ansprüche 1 oder 2, **dadurch gekennzeichnet, dass** der Mikroprozessor (21) eine Fehlfunktion bei den Zustandssignalen erkennt und ein Fehlersignal abgibt.

4. Verfahren nach Anspruch 3, **dadurch gekennzeichnet, dass** bei Abgabe des Fehlersignals keine neue Sollposition festgelegt wird.

5. Verfahren nach einem der Ansprüche 3 oder 4, **dadurch gekennzeichnet, dass** der Antrieb (10) bei Abgabe des Fehlersignals gestoppt wird.

6. Verfahren nach einem der vorhergehenden Ansprüche, **dadurch gekennzeichnet, dass** ein Zustand (5) in Abhängigkeit der erfassten Zustandssignale definiert wird und die Reaktion in Abhängigkeit des Ist-Zustands (5) von dem Mikroprozessor (21) aus einem Speicher (47) ausgelesen wird.

7. Verfahren nach einem der vorhergehenden Ansprüche, **dadurch gekennzeichnet, dass** als Reaktion mehrere, nacheinander anzufahrende Sollpositionen in einer Tabelle oder Funktionsmatrix festgelegt sind.

8. Verfahren nach einem der vorhergehenden Ansprüche, **dadurch gekennzeichnet, dass** die Zustandssignale abhängen von:
- der Einstellung des Bedienelements (22) und dem daraus abgeleiteten Stellbefehl (23) als Sollwertvorgabe und/oder
- einem Schaltzustand (52, 54) wenigstens eines in einem Teilbereich des Bewegungsbereichs des Schiebe-Hebe-Daches (16) betätigten Mikroschalters (56, 58) zum Erfassen der Ist-Position (26) des Schiebe-Hebe-Daches (16) und/oder
- den Sensorsignalen (36, 38) eines am Antrieb (10) und/oder am Schiebe-Hebe-Dach (16) angeordneten Mittels zum Erfassen der Ist-Position (26) des Schiebe-Hebe-Daches (16).

9. Verfahren nach Anspruch 8, **dadurch gekennzeichnet, dass** als Mittel (26) zum Erfassen der Ist-Position ein Zähler verwendet wird, der abhängig von der, insbesondere durch wenigstens einen Hallsensor (32, 34) mit zugeordnetem Magnetpolrad (28) ermittelten Umdrehungszahl und der Drehrichtung der Motorankerwelle (13) des Antriebs (10) inkrementiert und dekrementiert wird.

10. Verfahren nach einem der vorhergehenden Ansprüche, **dadurch gekennzeichnet, dass** durch eine aus Zustandssignalen gebildete erste Variable (1) angegeben wird, ob das Schiebe-Hebe-Dach (16) normiert oder entnormiert in Bezug zu einer Referenzposition ist.

11. Verfahren nach einem der vorhergehenden Ansprüche, **dadurch gekennzeichnet, dass** durch eine der aus Zustandssignalen gebildete zweite Variable (2) angegeben wird, ob sich das Schiebe-Hebe-Dach (16) in einer Schiebeposition oder in einer Hebeposition befindet.

12. Verfahren nach einem der vorhergehenden Ansprüche, **dadurch gekennzeichnet, dass** durch eine der aus Zustandssignalen gebildete dritte Variable (3) angegeben wird, ob das Schiebe-Hebe-Dach (16) gesch lossen oder geöffnet ist.

13. Verfahren nach einem der vorhergehenden Ansprüche, **dadurch gekennzeichnet, dass** durch eine der aus Zustandssignalen gebildete vierte Variable (4) die Einstellung des Bedienelements (22), insbesondere eines Potentiometers oder Wippschalters, angegeben wird.

14. Verfahren nach einem der vorhergehenden Ansprüche, **dadurch gekennzeichnet, dass** der Teilbereich, in dem der wenigstens eine Mikroschalter (56, 58) betätigt ist, als Übergangsbereich zwischen der Schiebe- und der Hebelage des Schiebe-Hebe-Daches (16) und/oder eine Endlage des Schiebe-Hebe-Daches (16) gewertet wird.

15. Verfahren nach einem der vorhergehenden Ansprüche, **dadurch gekennzeichnet, dass** die zyklische Erfassung der Zustandssignale durch den Mikroprozessor (21) nach einer vorgebbaren Wartezeit zur Entprellung der elektrischen Eingänge (39) erfolgt.

16. Verfahren nach einem der vorhergehenden Ansprüche, **dadurch gekennzeichnet, dass** als Bedienelement (22) wenigstens ein Potentiometer mit Rastpositionen und/oder wenigstens ein Wippschalter verwendet wird.

## Claims

1. Method for operating an electromotive drive (10) for adjusting a slide and tilt roof (16) of a motor vehicle by means of a signal-processing arrangement (20), having a microprocessor (21) to which an actuation instruction (23) of an operator control element (22) is set for a setpoint position of the slide and tilt roof (16) as a status signal and at least one further status signal of at least one means (26, 32, 34, 56, 58) for sensing the actual position of the drive (10) and/or of the slide and tilt roof (16), and which controls or regulates the drive (10) to move the slide and tilt roof (16) to its setpoint position, **characterized in that** the microprocessor (21) senses the at least two status signals cyclically and reads out, as a function of the signal combination, at least one of a plurality of defined reactions, it being possible, by means of repeated adjustment of the operator control element (22) during the adjustment process, for a further corresponding permitted slide and tilt roof position to be sensed immediately as a new setpoint position by the signal-processing arrangement (20), and to be approached directly irrespective of the first actuation instruction (23).

2. Method according to Claim 1, **characterized in that** the defined reactions are stored encoded in a memory (47) of the signal-processing arrangement (20).

3. Method according to one of Claims 1 or 2, **characterized in that** the microprocessor (21) detects a malfunction in the status signals and outputs a fault signal.

4. Method according to Claim 3, **characterized that** no new setpoint position is defined when the fault signal is output.

5. Method according to one of Claims 3 or 4, **characterized in that** a drive (10) is stopped when the fault signal is output.

6. Method according to one of the preceding claims, **characterized in that** a status (5) is defined as a function of the sensed status signals, and the reaction is read out from the microprocessor (21), from a memory (47), as a function of the actual status (5).

7. Method according to one of the preceding claims, **characterized in that** a plurality of setpoint positions which are to be approached successively are stored as a reaction in a table or functional matrix.

8. Method according to one of the preceding claims, **characterized in that** the status signals depend on:
- the adjustment of the operator control element (22) and the actuation instruction (23) derived therefrom, as a predefined setpoint value, and/or
- a switching status (52, 54) of at least one microswitch (56, 58), activated in a subrange of the movement range of the slide and tilt roof (16), in order to sense the actual position (26) of the slide and tilt roof (16) and/or
- the sensor signals (36, 38) of a means, arranged on the drive (10) and/or on the slide and tilt roof (16), for sensing the actual position (26) of the slide and tilt roof (16).

9. Method according to Claim 8, **characterized in that** a counter which is incremented and decremented as a function of the rotational speed, determined in particular by means of at least one Hall sensor (32, 34) with assigned magnet pole wheel (28), and the sense of rotation of the motor armature shaft (13) of the drive (10) is used as means (26) for sensing the actual position.

10. Method according to one of the preceding claims, **characterized in that** the first variable (1) which is formed from status signals specifies whether the slide and tilt roof (16) is standardized or destandardized with respect to a referenced position.

11. Method according to one of the preceding claims, **characterized in that** the second variable (2) which is formed from status signals specifies whether the slide and tilt roof (16) is in a sliding position or in a tilted position.

12. Method according to one of the preceding claims, **characterized in that** the third variable (3) which is formed from status signals specifies whether the slide and tilt roof (16) is opened or closed.

13. Method according to one of the preceding claims **characterized in that** a fourth variable (4) which is formed from status signals specifies the setting of the operator control element (22), in particular of a potentiometer or rocker switch.

14. Method according to one of the preceding claims, **characterized in that** the subrange in which the at least one microswitch (56, 58) is activated is evaluated as a transitional range between the sliding position and the tilted position of the slide and tilt roof (16) and/or an end position of the slide and tilt roof (16).

15. Method according to one of the preceding claims, **characterized in that** the status signals are sensed specifically by the microprocessor (21) after a predefinable waiting time in order to debounce the electrical inputs (39).

16. Method according to one of the preceding claims, **characterized in that** at least one potentiometer with latching positions and/or at least one rocker switch are used as the operator control element (22).

## Revendications

1. Procédé pour actionner un entraînement électromoteur (10) pour déplacer un toit ouvrant (16) d'un véhicule automobile à l'aide d'un dispositif de traitement de signaux (20), comprenant un microprocesseur (21) recevant une instruction de déplacement (23) d'un élément d'actionnement (22) pour une position de consigne du toit ouvrant (16) sous la forme d'un signal d'état, ainsi qu'au moins un autre signal d'état d'au moins un moyen (26, 32, 34, 56, 58) pour détecter la position réelle de l'entraînement (10) et/ou du toit ouvrant (16), et qui commande ou régule l'entraînement (10) pour déplacer le toit ouvrant (16) dans sa position de consigne,
**caractérisé en ce que**
le microprocesseur (21) détecte cycliquement au moins deux signaux d'état et, en fonction de la combinaison de signaux, lit au moins une de plusieurs réactions déterminées, et suite à un nouveau déplacement de l'élément d'actionnement (22) pendant le processus de déplacement, le dispositif de traitement de signaux (20) détectant immédiatement une autre position admise du toit ouvrant comme nouvelle position de valeur de consigne qui peut être directement visée sans tenir compte de la première instruction de déplacement (23).

2. Procédé selon la revendication 1,
**caractérisé en ce que**
les réactions déterminées sont enregistrées sous une forme codée dans une mémoire (47) du dispositif de traitement de signaux (20).

3. Procédé selon l'une quelconque des revendications 1 ou 2,
**caractérisé en ce que**
le microprocesseur (21) détecte une fonction défectueuse au niveau des signaux d'état et émet un signal de défaut.

4. Procédé selon la revendication 3,
**caractérisé en ce qu'**
en cas d'émission du signal de défaut aucune nouvelle position de consigne n'est déterminée.

5. Procédé selon l'une quelconque des revendications 3 ou 4,
**caractérisé en ce que**
l'entraînement (10) est stoppé en cas d'émission du signal de défaut.

6. Procédé selon l'une quelconque des revendications précédentes,
**caractérisé en ce qu'**
un état (5) est défini en fonction des signaux d'état détectés et la réaction est lue par le microprocesseur (21) d'une mémoire (47) en fonction de l'état réel (5).

7. Procédé selon l'une quelconque des revendications précédentes,
**caractérisé en ce qu'**
en tant que réaction plusieurs positions de consigne à viser successivement sont déterminées dans un tableau ou une matrice fonctionnelle.

8. Procédé selon l'une quelconque des revendications précédentes,
**caractérisé en ce que**
les signaux d'état sont fonction :
- du réglage de l'élément d'actionnement (22) et de l'instruction de déplacement (23) déduite de celui-ci servant à indiquer la valeur de consigne, et/ou
- d'un état de commutation (52, 54) d'au moins un micro-interrupteur (56, 58) actionné dans une zone partielle de la zone de mouvement du toit ouvrant (16) pour détecter la position réelle (26) du toit ouvrant (16), et/ou
- des signaux de capteur (36, 38) d'un moyen de détection de la position réelle (26) du toit ouvrant (16) disposé au niveau de l'entraînement (10) et/ou du toit ouvrant (16).

9. Procédé selon la revendication 8,
**caractérisé en ce que**
comme moyen (26) de détection de la position réelle, on utilise un compteur qui est incrémenté et décrémenté en fonction de la vitesse de rotation, déterminée notamment par au moins un capteur Hall (32, 34) avec roue à pôle magnétique associée, et du sens de rotation de l'arbre d'induit de moteur (13) de l'entraînement (10).

10. Procédé selon l'une quelconque des revendications précédentes,
**caractérisé en ce qu'**
une première variable (1) formée par des signaux d'état indique si le toit ouvrant (16) est cadré ou non par rapport à une position de référence.

11. Procédé selon l'une quelconque des revendications précédentes,
**caractérisé en ce qu'**
une deuxième variable (2) formée par des signaux d'état indique si le toit ouvrant (16) se trouve dans une position coulissée ou levée.

12. Procédé selon l'une quelconque des revendications précédentes,
**caractérisé en ce qu'**
une troisième variable (3) formée par des signaux d'état indique si le toit ouvrant (16) est fermé ou ouvert.

13. Procédé selon l'une quelconque des revendications précédentes,
**caractérisé en ce qu'**
une quatrième variable (4) formée par des signaux d'état indique le réglage de l'élément d'actionnement (22), notamment d'un potentiomètre ou d'un interrupteur à bascule.

14. Procédé selon l'une quelconque des revendications précédentes,
**caractérisé en ce que**
la zone partielle, dans laquelle au moins un micro-interrupteur (56, 58) est actionné, est considérée comme zone de passage entre la position coulissée et la position levée du toit ouvrant (16) et/ou comme une position finale du toit ouvrant (16).

15. Procédé selon l'une quelconque des revendications précédentes,
**caractérisé en ce que**
la détection cyclique des signaux d'état par le microprocesseur (21) est effectuée après un temps d'attente pouvant être prédéterminé pour libérer les entrées électriques (39).

16. Procédé selon l'une quelconque des revendications précédentes,
**caractérisé en ce que**
comme élément d'actionnement (22) on utilise au moins un potentiomètre à positions d'arrêt et/ou au moins un interrupteur à bascule.
